(19) Europäisches Patentamt / European Patent Office / Office européen des brevets

(11) **EP 4 404 304 A1**

(12) **EUROPEAN PATENT APPLICATION**
published in accordance with Art. 153(4) EPC

(43) Date of publication:
**24.07.2024 Bulletin 2024/30**

(21) Application number: **22961588.5**

(22) Date of filing: **24.11.2022**

(51) International Patent Classification (IPC):
**H01M 4/587** (2010.01)      **H01M 10/0525** (2010.01)
**C04B 35/32** (2006.01)      **C04B 35/622** (2006.01)

(86) International application number:
**PCT/CN2022/134148**

(87) International publication number:
**WO 2024/108503 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde City, Fujian 352100 (CN)**

(72) Inventors:
• **LIN, Xieji**
  **Ningde, Fujian 352100 (CN)**
• **SHEN, Rui**
  **Ningde, Fujian 352100 (CN)**
• **HE, Libing**
  **Ningde, Fujian 352100 (CN)**

(74) Representative: **Jacob, Reuben Ellis**
**Maucher Jenkins**
**Seventh Floor Offices**
**Artillery House**
**11-19 Artillery Row**
**London SW1P 1RT (GB)**

(54) **ARTIFICIAL GRAPHITE, AND PREPARATION METHOD THEREFOR AND USE THEREOF**

(57)     This application discloses a type of artificial graphite and a preparation method and application thereof. The preparation method of the artificial graphite according to an embodiment of this application includes the following step: heat-treating a graphite raw material to obtain artificial graphite, where an ambient atmosphere of the heat treatment is a mixed gas including a gas that is at least one of oxygen or water vapor and including a chemically inert gas, and, during the heat treatment, the graphite raw material is in a motion state. The preparation method of artificial graphite in an embodiment of this application controls the graphite raw material heat-treatment conditions including the heat-treatment atmosphere and the state of the graphite raw material, so as to at least modify a surface of the graphite raw material, and in turn, achieve high compaction densities of the artificial graphite powder and a resulting active layer. The artificial graphite of this application may serve as a negative active material and may be applied in a negative electrode and a battery.

FIG. 1

**Description**

**TECHNICAL FIELD**

This application relates to the field of battery technology, and in particular, to an artificial graphite and a preparation method and application thereof.

**BACKGROUND**

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

Moreover, with the popularization of battery application, higher requirements are imposed on battery performance such as energy density. In addition, with the gradual increase in the market share of electric new energy vehicles, a higher requirement is imposed on the cruising range currently.

The electrode material is one of key factors that affect the relative performance of the battery. For example, in a battery that uses carbon as a negative electrode material, the carbon negative electrode material is crucial to the related performance of the battery, especially to energy density. Among the carbon negative electrode materials, graphite has rapidly attracted extensive attention by virtue of rich resources, a low price, a high reversible capacity, low charge and discharge voltage plateaus, no voltage hysteresis, high conductivity, and other characteristics. Graphite materials are being researched and applied extensively. However, a low compaction density of the publicly reported graphite leads to a low compaction density of the electrode and a low energy density of the electrode and the battery, thereby hindering the improvement of the energy density of the battery and restricting the application of the battery.

**SUMMARY**

In view of the above problems, some embodiments of this application provide an artificial graphite and a preparation method and application thereof, so as to solve the technical problem of a low compaction density of an electrode caused by existing graphite.

According to a first aspect, an embodiment of this application provides a preparation method of artificial graphite. The preparation method of artificial graphite in an embodiment of this application includes the following step: heat-treating a graphite raw material to obtain artificial graphite, where an ambient atmosphere of the heat treatment is a mixed gas including a gas that is at least one of oxygen or water vapor and including a chemically inert gas, and, during the heat treatment, the graphite raw material is in a motion state.

The preparation method of artificial graphite in this embodiment of this application controls the graphite raw material heat-treatment conditions including the heat-treatment atmosphere and the state of the graphite raw material, so as to at least modify a surface of the graphite raw material, and in turn, improve a compaction density of the artificial graphite powder. At the same time, an electrode active layer prepared by using the artificial graphite of this embodiment of this application as an active material achieves a high compaction density.

In some embodiments, the heat treatment is performed at a temperature of 400 °C to 900 °C.

Alternatively, in some embodiments, the heat treatment is performed at a temperature of 400 °C to 900 °C and for duration of 10 to 60 minutes.

By controlling and adjusting the heat treatment temperature or both the temperature and the duration of heat treatment, the degree of heat treatment of graphite is controlled, thereby improving the properties such as compaction density of the artificial graphite powder, and in turn, increasing the compaction density of the electrode active layer formed by using the artificial graphite as a negative active material.

In some embodiments, during the heat treatment, the graphite is in a motion state. By heat-treating the to-be-treated graphite in a motion state, the modification effect for the heat treatment of graphite can be improved, thereby increasing the compaction density of the electrode active layer prepared by using the artificial graphite of this embodiment of this application as an active material.

In a further embodiment, the motion state is at least one of a continuous fluidizing state or a tumbling state.

In a further embodiment, the tumbling state is implemented by rotation of a furnace tube, and a rotation speed of the furnace tube is 1 to 8 r/min.

By heat-treating the to-be-treated graphite raw material in such motion states, the effect of heat treatment for the graphite can be improved.

In some embodiments, in the mixed gas, the gas that is at least one of oxygen or water vapor accounts for 5% to 40% of a total volume of the mixed gas.

In some embodiments, during the heat treatment, the mixed gas is fed in at a flow rate of 0 to 10 $m^3$/h.

By controlling and adjusting the gas ingredients of the heat-treatment atmosphere and the flow rate of the gas fed in, the modification effect of the heat treatment for the graphite raw material can be improved.

In some embodiments, a particle diameter $Dv_{50}$ of the graphite raw material is 16.0 to 24.0 $\mu$m.

In some embodiments, the graphite is an artificial graphite material.

By further selecting the particle diameter and type of the graphite raw material, the heat treatment effect can be improved, thereby further improving the compaction density of the artificial graphite powder and the compaction density of the prepared active layer.

In a further embodiment, the preparation method of the artificial graphite material includes the following steps:

crushing a solid-state carbon source to obtain a granular solid-state carbon source;
shaping the granular solid-state carbon source to obtain shaped particles; and
graphitizing the shaped particles to obtain an artificial graphite raw material.

When the artificial graphite raw material prepared by this method is used as the to-be-treated graphite raw material, this application can effectively control and adjust the surface, morphology, particle diameter, and the like of the graphite raw material, thereby improving the heat-treatment effect for the graphite raw material, and in turn, further increasing the compaction density of the artificial graphite and the compaction density of the prepared active layer.

In a further embodiment, a particle diameter $Dv_{50}$ of the granular solid-state carbon source is 16.0 to 24.0 $\mu$m. By controlling the particle diameter of the granular solid-state carbon source, this application can control the particle diameter of the artificial graphite raw material generated by graphitization.

In a further embodiment, the solid-state carbon source includes at least one of petroleum coke, needle coke, pitch coke, or metallurgical coke. Such solid-state carbon sources can be effectively graphitized. The surface, particle diameter, and morphology of the solid-state carbon sources can be flexibly controlled as required.

In a further embodiment, before the shaped particles are graphitized, the preparation method further includes a step of granulating the shaped particles. By granulating the shaped particles, this application can further control and adjust the surface, particle diameter, and morphology of the shaped particles, thereby controlling and adjusting the surface, particle diameter, and morphology of the artificial graphite raw material, and in turn, improving the modification effect of heat treatment for the artificial graphite raw material.

In a further embodiment, a method of the granulation includes the following step:
mixing a carbon source binder with the shaped particles, and then performing granulation and molding.

The granulation performed according to this method can improve the modification effect of heat treatment for the artificial graphite raw material after the carbon source particles obtained by granulation and molding are graphitized.

In a further embodiment, the graphitization is performed at a temperature of 2800 °C to 3200 °C. The graphitization can improve the graphitization degree and the effect of heat treatment for the artificial graphite material.

According to a second aspect, an embodiment of this application provides a type of artificial graphite. The artificial graphite is the artificial graphite prepared by the artificial graphite preparation method disclosed in an embodiment of this application above.

Because the artificial graphite in this application is the artificial graphite prepared by the artificial graphite preparation method disclosed in an embodiment of this application above, the artificial graphite material powder in an embodiment of this application possesses a high compaction density, and imparts a high compaction density to the active layer prepared by using the artificial graphite powder as an active material.

In some embodiments, a compaction density and a particle diameter of the artificial graphite of this application satisfy the following relationships:

$$ks = P_{5k}/(Dv_{50} \times G), \text{ and } 100 \leq ks \leq 150.$$

In the relational expression above, $P_{5k}$ is a compaction density of powder of the artificial graphite at a pressure of 5000 kg, measured in units of g/cm$^3$; $Dv_{50}$ is an average particle diameter of the artificial graphite, measured in units of $\mu$m; G is a graphitization degree of the artificial graphite; and ks is measured in units of kg/cm$^4$.

When the compaction density $P_{5k}$, the particle diameter $Dv_{50}$, and the graphitization degree of the artificial graphite in an embodiment of this application satisfy the above relationships, the artificial graphite powder possesses a higher compaction density, and the compaction density of the active layer is further increased.

In some embodiments, ks satisfies $110 \leq ks \leq 130$. When ks falls within such a range, the compaction density of the artificial graphite powder and the compaction density of the active layer in an embodiment of this application can be further increased.

In some embodiments, $P_{5k}$ is 1.8 to 2.10 g/cm$^3$.

In a further embodiment, $P_{5k}$ is 1.85 to 2.05 g/cm$^3$.

The compaction density of the artificial graphite powder in an embodiment of this application is high.

In some embodiments, $Dv_{50}$ is 16 to 24.0 $\mu$m.

In a further embodiment, $Dv_{50}$ is 16.0 to 18.0 $\mu$m.

When the particle diameter falls within this range, the compaction density of the artificial graphite powder in an embodiment of this application and the compaction density of the resulting active layer are even higher.

In some embodiments, G is 91% to 96%.

In a further embodiment, G is 92% to 95%.

The graphitization degree of the artificial graphite in an embodiment of this application is high.

In some embodiments, a volume average diameter $Dv_{10}$ of the artificial graphite is 4.0 to 15.0 $\mu$m.

In some embodiments, a volume average diameter $Dv_{90}$ of the artificial graphite is 20.0 to 40.0 $\mu$m.

In some embodiments, a number average diameter $Dn_{10}$ of the artificial graphite is 2.0 to 8.0 $\mu$m.

The above particle diameter feature of the artificial graphite in an embodiment of this application can further increase the compaction density of the artificial graphite powder and the compaction density of the active layer in an embodiment of this application.

In some embodiments, the artificial graphite further exhibits at least one of the following characteristics:

a gravimetric capacity of the artificial graphite is 340 to 365 mAh/g;
a specific surface area of the artificial graphite is 1.5 to 2.5 $m^2$/g; and
a tap density of the artificial graphite is 0.80 to 1.20 $g/cm^3$.

In a further embodiment, the artificial graphite further exhibits at least one of the following characteristics:

a gravimetric capacity of the artificial graphite is 345 to 363 mAh/g;
a specific surface area of the artificial graphite is 1.6 to 2.3 $m^2$/g; and
a tap density of the artificial graphite is 0.82 to 1.18 $g/cm^3$.

When the $P_{5k}$ compaction density, the particle diameter, and the graphitization degree fall within the above ranges, both the artificial graphite powder in an embodiment of this application and the resulting active layer possess a high compaction density. In addition, the particle morphology characteristics such as the specific surface area and the tap density of the artificial graphite are superior, and the gravimetric capacity is high.

According to a third aspect, an embodiment of this application provides a negative electrode material. The negative electrode material in this embodiment of this application includes artificial graphite. The artificial graphite is the artificial graphite disclosed above in an embodiment of this application.

The negative electrode material in an embodiment of this application possesses a high compaction density, and the compaction density is stable. The compaction density of the resulting negative active layer is high.

According to a fourth aspect, an embodiment of this application provides a negative electrode. The negative electrode material contained in the negative electrode in this embodiment of this application includes the artificial graphite disclosed in an embodiment of this application or the negative electrode material disclosed in an embodiment of this application.

The negative electrode material contained in the negative electrode disclosed in this embodiment of this application contains the artificial graphite disclosed above in an embodiment of this application. Therefore, the active layer of the negative electrode is superior in the compaction density, energy density, rate performance, and cycle performance.

According to a fifth aspect, an embodiment of this application provides a battery. The battery disclosed in this embodiment of this application includes the negative electrode disclosed in an embodiment of this application. Because the battery in this embodiment of this application contains the negative electrode disclosed in an embodiment of this application, the secondary battery possesses a high energy density, high rate performance, and good cycle stability.

According to a sixth aspect, an embodiment of this application provides an electrical device. The electrical device disclosed in this embodiment of this application includes the battery disclosed in an embodiment of this application. The battery is configured to provide electrical energy. The electrical device in this embodiment of this application possesses a high standby time or power endurance time.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

## BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:

FIG. 1 is a schematic flowchart of a preparation method of an artificial graphite material according to an embodiment of this application;

FIG. 2 is a schematic structural diagram of a secondary battery according to an embodiment of this application;

FIG. 3 is a schematic exploded view of the secondary battery shown in FIG. 2;

FIG. 4 is a schematic structural diagram of a battery module according to an embodiment of this application;

FIG. 5 is a schematic structural diagram of a battery pack according to an embodiment of this application;

FIG. 6 is a schematic exploded view of the battery pack shown in FIG. 5; and

FIG. 7 is a schematic diagram of an electrical device that contains a secondary battery of this application as a power supply.

List of reference numerals:

10. secondary battery cell; 11. housing; 12. electrode assembly; 13. cover plate;
20. battery module;
30. battery pack; 31. box; 32. lower box.

## DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Terms and definitions involved in some embodiments of this application:

Graphitization degree (G): means a degree to which carbon atoms form a close-packed hexagonal graphite crystal structure. The closer the lattice dimensions of the crystal structure is to the lattice parameters of ideal graphite, the higher the graphitization degree. The graphitization degree is generally calculated by using a graphite lattice constant determined by X-ray diffractometry (XRD). The calculation formula is:

$$G = (3.440 - d_{002})/(3.440 - 3.354).$$

In the formula above, $d_{002}$ is an interplanar spacing of the (002) plane of the graphite obtained by X-ray diffraction, 3.440 is an interplanar spacing of the (002) plane of completely non-graphitized carbon, and 3.354 is an interplanar spacing of the (002) plane of ideal graphitized carbon.

Compaction density: means a ratio of the areal density of the active layer formed by the artificial graphite to the thickness of a calendered electrode plate. For example, the compaction density is calculated as: compaction density = areal density/(thickness of calendered electrode plate - thickness of current collector), and measured in units of $g/cm^3$.

Tap density: means the mass per unit volume of the artificial graphite powder in a container tapped under specified conditions, measured in units of $g/cm^3$.

Particle diameter $Dv_{50}$: means a particle diameter corresponding to a cumulative volume distribution percentage 50% in a volume-based particle size distribution of artificial graphite.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps growing with the increase of the application fields of the power batteries. Especially, in the fields such as new energy vehicles and unmanned aerial vehicles, the requirement on power durability is increasingly higher, thereby inevitably giving rise to higher requirements on the energy density of the battery.

Because lithium-ion batteries prepared by using a carbon material as a negative electrode material exhibit safety and stability to some extent, the research on carbon materials has attracted the attention of researchers from various countries. Carbon materials mainly include a graphite carbon material, a non-graphite carbon material, a doped carbon material, and a coated carbon material. Among the multitudinous carbon negative electrode materials, graphite has rapidly attracted extensive attention by virtue of rich resources, a low price, a high reversible capacity, low charge and discharge voltage plateaus, no voltage hysteresis, high conductivity, and other characteristics. As a negative electrode material, the artificial graphite possesses the advantages of high cycle performance, high rate performance, and adaptability to a wide range of electrolyte solutions.

However, the inventor hereof has found through analysis that the existing solutions to the artificial graphite mainly focus on how to overcome the defects caused by the two-dimensional structure of the graphite material in an attempt to improve the cycle performance, rate performance, and the like of the graphite, but increase the compaction density of the graphite material insignificantly or even cause the energy density of the graphite material to decline.

For example, in a disclosed artificial graphite negative electrode material, the preparation method mainly includes: etching a surface of artificial graphite by use of strong acid or strong alkali to obtain a graphite material A with a porous structure on a surface of the material; mixing the artificial graphite material A, an amorphous carbon precursor, and a conductive agent mechanically to obtain a graphite-coated precursor B; and carbonizing and pulverizing the graphite-coated precursor B to obtain a surface-coated graphite negative electrode material for a high-power lithium-ion battery.

During the research on the above negative electrode material, the inventor finds that the surface oxidation treatment and amorphous carbon coating treatment performed by etching with strong acid or strong alkali can improve the high-rate charge and discharge performance of the artificial graphite, but the surface oxidation treatment directly leads to a decline in the compaction density and cycle performance. The compaction density of the amorphous carbon coating layer is also low. Consequently, the compaction density of the negative electrode plate is reduced and unstable, thereby further impairing the energy density. In addition, the pulverization process increases surface defects, and deteriorates the compaction density and cycle performance of the negative electrode material.

To meet the power durability requirement on the market and increase the energy density of the battery, the inventor finds through research that treatment such as surface treatment on the graphite material can effectively increase the compaction density of the graphite material.

Through further research, the inventor finds that the increase of the compaction density of the artificial graphite material does not necessarily increase the compaction density of a negative active layer made of the artificial graphite material. In order to increase the compaction density of the active layer when the artificial graphite is used as a negative electrode material, the inventor finds through research that controlling the heat treatment conditions of the graphite raw material can at least modify the surface structure of the graphite raw material, a functional group contained in the graphite raw material, and the like. In this way, the compaction density of the modified graphite is increased, and at the same time, the compaction density of the negative active layer formed by using the modified graphite as a negative active material is also increased. Therefore, a type of artificial graphite and a preparation method thereof are disclosed in an embodiment of this application to increase the compaction density of the artificial graphite material and increase the compaction density of the active layer formed by using the artificial graphite as a negative active material, so as to increase the energy density of the electrode and the battery.

**Preparation method of artificial graphite**

According to a first aspect, an embodiment of this application provides a preparation method of artificial graphite. The preparation method of artificial graphite in an embodiment of this application includes the following step: heat-treating a graphite raw material to obtain artificial graphite, where an ambient atmosphere of the heat treatment is a mixed gas including a gas that is at least one of oxygen or water vapor and including a chemically inert gas, and, during the heat treatment, the graphite raw material is in a motion state.

In the preparation method of artificial graphite in this embodiment of this application, the heat treatment atmosphere is controlled to be a mixed atmosphere formed by at least one chemically inert gas containing at least one of oxygen or water vapor. The mixed atmosphere contains a component that is capable of oxidation or other modification functions to some extent, such as oxygen and water vapor, so as to react with the graphite raw material in the heat treatment atmosphere to at least modify the surface of the graphite raw material. In addition, the motion state of the graphite raw material means that the graphite raw material is moving during heat treatment, that is, moving relative to a substrate that carries the graphite raw material.

Therefore, in the preparation method of artificial graphite in this embodiment of this application, the graphite raw material is heat-treated in the foregoing atmosphere while moving, so as to modify the graphite raw material in terms of the surface, morphology, and the like of the material, and in turn, endow the artificial graphite powder with a high compaction density. When the artificial graphite is used as a negative active material, the compaction density of the formed active layer can be increased.

In an embodiment, the heat treatment is performed at a temperature of 400 °C to 900 °C. In an example, typically but not restrictively, the heat treatment temperature may be 400 °C, 450 °C, 500 °C, 550 °C, 600 °C, 650 °C, 700 °C, 750 °C, 800 °C, 850°C, or 900°C. In an embodiment, when the heat treatment is performed at a temperature of 400 °C to 900 °C, the heat treatment may continue for duration of 10 to 60 minutes. By controlling and adjusting the heat treatment temperature or both the temperature and duration of heat treatment, the degree of heat-treatment modification of the graphite raw material is controlled, thereby improving at least the modification effect for the surface of the graphite raw material, and in turn, improving the properties such as compaction density of the artificial graphite powder. In conjunction with the particle diameter and graphitization degree of the artificial graphite, the value range of ks to be mentioned below is further adjusted, thereby increasing the compaction density of the artificial graphite powder, increasing the compaction density of the active layer formed by using the artificial graphite as a negative active material, and in turn, increasing the energy density of the negative electrode.

In some embodiments, the motion state of the graphite may be at least one of a fluidizing state or a tumbling state. In an example, the fluidizing state may be implemented by a fluidized bed. The tumbling state may be implemented by furnace tube rotation, for example, by rotating a furnace tube of a horizontal reactor or a rotary kiln, or by other means. In this way, the graphite raw material to be treated is loaded in the rotary kiln, and the rotary kiln is controlled to rotate to keep the to-be-treated graphite raw material moving.

When the motion state of the to-be-treated graphite raw material during the heat treatment is a tumbling state, the tumbling state is implemented by rotation of the furnace tube. In an embodiment, the rotation speed of the furnace tube is 1 to 8 r/min. By controlling the tumbling speed of the graphite raw material, the modification effect of heat treatment for the graphite raw material is improved, and the efficiency and uniformity of the heat treatment are improved at the same time, thereby increasing both the compaction density of the artificial graphite and the compaction density of the active layer formed by using the artificial graphite as a negative active material.

In some embodiments, in the mixed gas used as a heat-treatment atmosphere for the graphite raw material, the gas that is at least one of oxygen or water vapor accounts for 5% to 40% of a total volume of the mixed gas. By controlling the concentration of the oxygen and water vapor in the mixed gas, the modification effect and degree of heat treatment can be adjusted, thereby improving the modification effect of heat treatment, and further improving the compaction density of the artificial graphite and the compaction density of the active layer formed by using the artificial graphite as an active material. In addition, the chemically inert gas in the mixed gas may be nitrogen or an inert gas.

In some embodiments, during the heat treatment, the mixed gas may be fed into the heat treatment environment at a flow rate of 0 to 10 $m^3/h$, so as to improve stability of the heat treatment environment, and in turn, improve the modification effect of heat treatment for the graphite raw material.

In some embodiments, the particle diameter $Dv_{50}$ of the graphite raw material is 16.0 to 24.0 $\mu$m, and further, $Dv_{50}$ may be 16.0 to 18.0 $\mu$m. In other embodiments, the graphitization degree G of the graphite raw material is 91% to 96%, and further, may be 92% to 95%. By further controlling the particle diameter and graphitization degree of the graphite raw material, the modification effect for the graphite raw material in the heat treatment environment can be improved. In this way, on the basis of improving the compaction density of the artificial graphite, the compaction density in conjunction with other factors such as the particle diameter and graphitization degree of the artificial graphite can exert a synergistic effect, thereby adjusting and optimizing the range of the ks value below, for example, controlling the ks value to satisfy $100 \leq ks \leq 150$, and in turn, further increasing the compaction density of the active layer formed by using the artificial graphite as a negative active material.

In some embodiments, the graphite raw material may be an artificial graphite raw material. By selecting the type of the graphite raw material to be treated, the modification effect of heat treatment can be improved, thereby further improving the compaction density of the artificial graphite and the compaction density of the active layer formed by using the artificial graphite as an active material. Alternatively, the heat treatment may be performed by directly using natural graphite as a raw material to implement the modification.

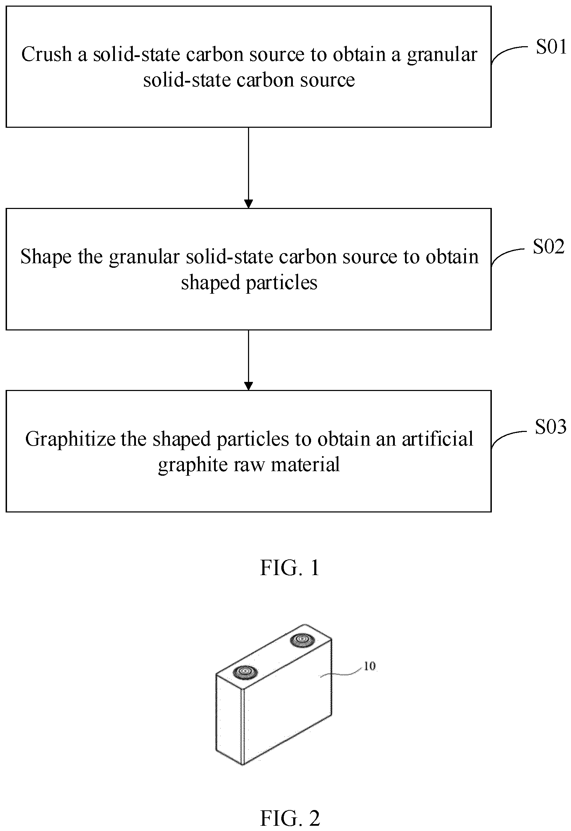

When the graphite raw material to be heat-treated is artificial graphite raw material, in an embodiment, as shown in FIG. 1, the preparation method of the artificial graphite raw material includes the following steps:

S01: Crushing a solid-state carbon source to obtain a granular solid-state carbon source;
S02: Shaping the granular solid-state carbon source to obtain shaped particles; and
S03: Graphitizing the shaped particles to obtain an artificial graphite raw material.

When the artificial graphite raw material prepared by this method is used as the above graphite raw material to be heat-treated, this application can effectively control and adjust the surface, morphology, particle diameter, and the like of the graphite raw material, thereby improving the modification effect of the heat treatment for the graphite raw material, and further increasing the compaction density of the active layer formed by using the artificial graphite as a negative active material.

Step S01:

In step S01, the solid-state carbon source means a carbon source available for preparing graphite. For example, in an embodiment, the solid-state carbon source may include at least one of petroleum coke, needle coke, pitch coke, or metallurgical coke. Such solid-state carbon sources can be effectively graphitized. In addition, the surface, particle diameter, and morphology of such solid-state carbon sources can be flexibly controlled as required, so as to improve the graphitization effect, improve the properties such as surface, particle diameter, and morphology of the graphite raw material, improve the modification effect of heat treatment for the graphite raw material, and ultimately improve the electrochemical properties such as the compaction density of the artificial graphite.

The solid-state carbon source may be crushed as required until the desired particle diameter is achieved. For example, in an embodiment, the particle diameter $Dv_{50}$ of the granular solid-state carbon source obtained by crushing may be 16.0 to 24.0 $\mu$m. By controlling the particle diameter of the granular solid-state carbon source, this application can control the particle diameter of the artificial graphite material generated by graphitization, and control the particle diameter of the heat-treated artificial graphite to fall within the range of 16.0 to 24.0 $\mu$m mentioned above.

In an example, the crushing may be performed by using a crusher, but without limitation.

Step S02:

In step S02, the granular solid-state carbon source in step S01 is shaped. In this way, the surface, particle diameter, and the like of the granular solid-state carbon source particles can be further adjusted, and therefore, the surface, particle diameter, morphology, and the like of the artificial graphite material are further adjusted, thereby improving the modification effect of heat treatment for the artificial graphite material, and improving the electrochemical properties such as compaction density of the artificial graphite.

In an example, the shaping is to make the solid-state carbon source particles move and rub against each other to achieve the purpose of particle shaping. For example, the granular solid-state carbon source is processed by using a shaping machine.

In some embodiments, after the shaping and before the shaped particles are graphitized, the preparation method further includes a step of granulating the shaped particles. By granulating the shaped particles, this application can further control and adjust the surface, particle diameter, and morphology of the shaped particles, thereby controlling and adjusting the surface, particle diameter, and morphology of the artificial graphite material, and in turn, improving the modification effect of heat treatment for the artificial graphite raw material, and ultimately improving the electrochemical properties such as compaction density of the heat-treated artificial graphite.

In an embodiment, a method of the granulation may include the following step: mixing a carbon source binder with the shaped particles, and then performing granulation and molding.

After the carbon source binder is mixed with the shaped particles, the binder can exert a bonding effect to effectively wrap the shaped particles. After granulation and molding, the surface, morphology, and the like of the shaped particles can be adjusted, or small particles can be bonded together to form secondary particles. In this way, after the granulated and molded carbon source particles are graphitized, the surface, particle diameter, and morphology of the artificial graphite raw material are further improved, thereby further improving the modification effect of heat treatment for the artificial graphite material, and ultimately improving the electrochemical properties such as compaction density of the heat-treated artificial graphite.

In an embodiment, the carbon source binder may be mixed with the shaped particles at such a ratio that the mass of the carbon source binder is 5% to 15% of the mass of the shaped particles.

In an example, the carbon source binder may include at least one of pitch, phenolic resin, or epoxy resin. When the carbon source binder is pitch, the molten pitch is mixed with the shaped particles so that the molten pitch and the shaped particles are sufficiently dispersed.

The granulated and molded carbon source particles need to ensure that the particle diameter $Dv_{50}$ of the graphitized artificial graphite raw material is 16.0 to 24.0 $\mu$m.

Step S03:

In step S03, the shaped particles or the granulated carbon source particles are subjected to graphitization, so that the shaped particles or carbon source particles are graphitized to generate an artificial graphite raw material. In addition, the shaped particles or the carbon source particles are used as a precursor of the artificial graphite raw material. Therefore, the surface, particle diameter, and morphology of the artificial graphite raw material generated by graphitization are further improved, thereby further improving the effect of heat treatment for the artificial graphite raw material, and ultimately improving the electrochemical properties such as compaction density of the heat-treated artificial graphite.

In an embodiment, the graphitization may be performed at a temperature of 2800 °C to 3200 °C. The surface, particle diameter, morphology, and the like of the artificial graphite material can be further improved by controlling and adjusting the graphitization temperature or both the temperature and duration of graphitization, so as to further improve the modification effect of heat treatment for the artificial graphite material. For example, after the graphitization process, the graphitization degree G of the obtained artificial graphite raw material may be 91% to 96%, and further, may be 92% to 95%.

**Artificial graphite material**

According to a second aspect, an embodiment of this application provides a type of artificial graphite. The artificial graphite in this embodiment of this application is the artificial graphite prepared by the artificial graphite preparation method disclosed in an embodiment of this application above.

Because the artificial graphite in this application is the artificial graphite prepared by the artificial graphite preparation method disclosed in an embodiment of this application above, At least the characteristics such as surface properties of the artificial graphite material in this embodiment of this application are modified in contrast to conventional artificial graphite. As shown in a test, the artificial graphite material in this embodiment of this application possesses a high compaction density. The compaction density of the active layer formed by using the artificial graphite material as an active material is also high.

In an embodiment, from the test of the artificial graphite in this embodiment of this application, the inventor learns that the compaction density and the particle diameter of the artificial graphite of this application satisfy the following relationships:

$$ks = P_{5k}/(Dv_{50} \times G), \text{ and } 100 \leq ks \leq 150.$$

In the relational expressions above, $P_{5k}$ is the compaction density of the artificial graphite powder in this embodiment of this application at a pressure of 5000 kg. In an example, $P_{5k}$ may be the compaction density of the artificial graphite powder in this embodiment of this application at a pressure of 5000 kg, measured at the end of 10 seconds after release of the pressure that has been maintained for 30 seconds, in units of $g/cm^3$.

$Dv_{50}$ is a volume average diameter of the artificial graphite in this embodiment of this application, measured in units of $\mu m$.

G is the graphitization degree of the artificial graphite in this embodiment of this application.

The unit of ks is $kg/cm^4$.

Through research, the inventor finds that, when the compaction density $P_{5k}$, the particle diameter $Dv_{50}$, and the graphitization degree of the artificial graphite prepared by the artificial graphite preparation method in this embodiment of this application, that is, the artificial graphite disclosed in an embodiment of this application, satisfy the above relational expressions, the artificial graphite in this embodiment of this application possesses a high compaction density, and the resulting active layer also possesses a high compaction density. Therefore, when the artificial graphite is used as a negative electrode material, the energy density of the negative electrode and the battery can be increased.

In some embodiments, through further research and test, the inventor finds that, by adjusting the heat treatment conditions in the artificial graphite preparation method disclosed above in an embodiment of this application, the compaction density $P_{5k}$, the particle diameter $Dv_{50}$, and the graphitization degree of the artificial graphite in this embodiment of this application can be adjusted to make the value of ks fall within a range of 110 to 130, that is, $110 \leq ks \leq 130$. When ks falls within such a range, the compaction density of the artificial graphite material in this embodiment of this application is higher, the bonding strength between the artificial graphite particles is high, and the compaction density is stable. In addition, the resulting active layer also possesses a higher compaction density.

In some embodiments, as tested, the artificial graphite in this embodiment of this application exhibits at least the following characteristics:

$P_{5k}$ of the artificial graphite in this embodiment of this application is 1.80 to 2.10 $g/cm^3$, and further, may be 1.85 to 2.05 $g/cm^3$. To be specific, typically but not restrictively, the compaction density $P_{5k}$ may be 1.80 $g/cm^3$, 1.83 $g/cm^3$, 1.85 $g/cm^3$, 1.90 $g/cm^3$, 1.95 $g/cm^3$, 2 $g/cm^3$, 2.05 $g/cm^3$, 2.10 $g/cm^3$, or the like. The compaction densities of the artificial graphite and the resulting active layer in this embodiment of this application are high. The compaction density $P_{5k}$ in this range together with the appropriate particle diameter and graphitization degree can control the ks value to satisfy $100 \leq ks \leq 150$, and further, satisfy $110 \leq ks \leq 130$. In the relational expressions above, $P_{5k}$ is the value of compaction density of the artificial graphite powder in this embodiment of this application at a pressure of 5000 kg, measured at the end of 10 seconds after release of the pressure that has been maintained for 30 seconds.

$Dv_{50}$ of the artificial graphite in this embodiment of this application may be 16 to 24.0 $\mu m$, and further, may be 16.0 to 18.0 $\mu m$. In an example, typically but not restrictively, the particle diameter $Dv_{50}$ may be 16.0 $\mu m$, 17.0 $\mu m$, 18.0 $\mu m$, 19.0 $\mu m$, 20.0 $\mu m$, 21.0 $\mu m$, 22.0 $\mu m$, 23.0 $\mu m$, 24.0 $\mu m$, or the like. The particle diameter $Dv_{50}$ in this range can increase the compaction density of the artificial graphite in this embodiment of this application and the compaction density of the resulting active layer.

The graphitization degree G of the artificial graphite in this embodiment of this application may be controlled to 91%~96%, and further, may be 92% to 95%. In an example, typically but not restrictively, the graphitization degree may be 91%, 92%, 93%, 94%, 95%, 96%, or the like. Therefore, the graphitization degree of the artificial graphite in this embodiment of this application is high. In conjunction with the $Dv_{50}$ and $P_{5k}$ described above, the value of ks is controlled and optimized to a value within the above range, thereby further increasing the compaction densities of the artificial graphite and the resulting active layer.

In addition, when the compaction density $P_{5k}$, the particle diameter, and the graphitization degree of the artificial graphite in this embodiment of this application fall within the specified range, the ks value can be controlled to satisfy $100 \leq ks \leq 150$, and further, satisfy $110 \leq ks \leq 130$. By optimizing the value ranges of the three parameters, the comprehensive performance of the artificial graphite material in this embodiment of this application can be improved. For example, the characteristics such as surface characteristics can be improved. In this way, the properties such as compaction density of the artificial graphite in this embodiment of this application are improved, the bonding strength between artificial graphite particles is increased.

In some embodiments, through further research and test, inventor finds that the artificial graphite in this embodiment of this application exhibits at least one of the following characteristics with respect to the particle diameter:

The volume average diameter $Dv_{10}$ of the artificial graphite may be 4.0 to 15.0 $\mu m$, and further, may be 6.0 to 10.0 $\mu m$. In an example, typically but not restrictively, the particle diameter $Dv_{10}$ may be 4.0 $\mu m$, 5.0 $\mu m$, 6.0 $\mu m$, 7.0 $\mu m$, 8.0 $\mu m$, 9.0 $\mu m$, 10.0 $\mu m$, 11.0 $\mu m$, 12.0 $\mu m$, 13.0 $\mu m$, 14.0 $\mu m$, 15.0 $\mu m$, or the like.

The volume average diameter $Dv_{90}$ of the artificial graphite may be 20.0 to 40.0 $\mu m$, and further, may be 24.0 to 35.0 $\mu m$. In an example, typically but not restrictively, the particle diameter $Dv_{90}$ may be 20.0 $\mu m$, 21.0 $\mu m$, 22.0 $\mu m$, 23.0 $\mu m$, 24.0 $\mu m$, 25.0 $\mu m$, 26.0 $\mu m$, 27.0 $\mu m$, 28.0 $\mu m$, 29.0 $\mu m$, 30.0 $\mu m$, 31.0 $\mu m$, 32.0 $\mu m$, 33.0 $\mu m$, 34.0 $\mu m$, 35.0 $\mu m$, 36.0 $\mu m$, 37.0 $\mu m$, 38.0 $\mu m$, 39.0 $\mu m$, 40.0 $\mu m$, or the like.

The number average diameter $Dn_{10}$ of the artificial graphite may be 2.0 to 8.0 $\mu m$, and further, may be 3.0 to 5.0 $\mu m$. In an example, typically but not restrictively, the particle diameter $Dn_{10}$ may be 2.0 $\mu m$, 3.0 $\mu m$, 4.0 $\mu m$, 5.0

µm, 6.0 µm, 7.0 µm, 8.0 µm, or the like.

The compaction density $P_{5k}$, the particle diameter, and the graphitization degree of the artificial graphite in this embodiment of this application falls within the parameter ranges specified above, and the artificial graphite exhibits the above particle diameter characteristics, thereby further increasing the compaction density of the artificial graphite in this embodiment of this application, and increasing the bonding strength between the artificial graphite particles.

In some embodiments, through further research and test, inventor finds that the artificial graphite in this embodiment of this application exhibits at least one of the following characteristics:

The BET specific surface area of the artificial graphite may be 1.5 to 2.5 $m^2/g$, and further, may be 1.6 to 2.3 $m^2$. In an example, typically but not restrictively, the specific surface area may be 1.5 $m^2/g$, 1.6 $m^2/g$, 1.7 $m^2/g$, 1.8 $m^2/g$, 1.9 $m^2/g$, 2.0 $m^2/g$, 2.1 $m^2/g$, 2.2 $m^2/g$, 2.3 $m^2/g$, 2.4 $m^2/g$, 2.5 $m^2/g$, or the like.

The tap density of the artificial graphite may be 0.80 to 1.20 $g/cm^3$, and further, may be 0.82 to 1.18 $g/cm^3$. In an example, typically but not restrictively, the tap density may be 0.80 $g/cm^3$, 0.85 $g/cm^3$, 0.90 $g/cm^3$, 0.95 $g/cm^3$, 1.00 $g/cm^3$, 1.05 $g/cm^3$, 1.10 $g/cm^3$, 1.15 $g/cm^3$, 1.20 $g/cm^3$.

The gravimetric capacity of the artificial graphite may be 340 to 365 mAh/g, and further, may be 345 to 363 mAh/g. In an example, typically but not restrictively, the gravimetric capacity may be 340 mAh/g, 343 mAh/g, 345 mAh/g, 348 mAh/g, 350 mAh/g, 353 mAh/g, 355 mAh/g, 358 mAh/g, 360 mAh/g, 362 mAh/g, 365 mAh/g, or the like.

Therefore, both the compaction density of the artificial graphite in this embodiment of this application and the compaction density of the resulting active layer are high. Further, the compaction density $P_{5k}$, the particle diameter, the graphitization degree, and other parameters of the artificial graphite satisfy the above relational expression. In addition, the artificial graphite possesses particle morphology characteristics such as a high specific surface area and a high tap density. Such particle morphology characteristics can further increase the compaction density of the artificial graphite in this embodiment of this application and the compaction density of the resulting active layer and increase the bonding strength between the artificial graphite particles. Moreover, the gravimetric capacity of the artificial graphite in this embodiment of this application is high.

**Negative electrode material**

According to a third aspect, an embodiment of this application provides a negative electrode material. The negative electrode material according to this embodiment of this application includes artificial graphite.

The artificial graphite contained in the negative electrode material in this embodiment of this application is the artificial graphite disclosed above in an embodiment of this application. In this way, the compaction density of the negative electrode material in this embodiment of this application and the compaction density of the resulting active layer are both high. The bonding strength between the negative electrode material particles is high, the compaction resilience is low, and the compaction density is stable. Therefore, the electrode containing the negative electrode material disclosed in this embodiment of this application possesses a high energy density.

The negative electrode material in this embodiment of this application may further contain other negative electrode materials in addition to the artificial graphite disclosed above in this embodiment of this application or contain an additive that facilitates functioning of the negative electrode material. All other negative electrode materials or additives that can be complexed with the artificial graphite to exert the activity of the negative electrode material or can assist the artificial graphite in exerting the activity of the negative electrode material fall within the scope of this embodiment of this application.

**Negative electrode**

According to a fourth aspect, an embodiment of this application provides a negative electrode. The negative electrode material contained in the negative electrode in this embodiment of this application includes the artificial graphite disclosed above in an embodiment of this application or the negative electrode material disclosed in an embodiment of this application.

The negative electrode material contained in the negative electrode in this embodiment of this application contains the artificial graphite disclosed above in an embodiment of this application. Therefore, the negative active layer formed by the negative electrode material exhibits a high compaction density, low compaction resilience, and high conductivity, thereby endowing the negative electrode in this embodiment of this application with a high energy density, high rate performance, and high cycle performance.

In an embodiment, the negative electrode in this embodiment of this application may include a negative current collector and a negative active layer disposed on the negative current collector.

The negative current collector contained in the negative electrode in this embodiment of this application may be a copper foil or another negative current collector. Properties such as thickness of the negative current collector may be adjusted as specifically required in practical applications.

In an embodiment, the negative active layer contained in the negative electrode in this embodiment of this application may contain ingredients such as a conductive agent, a binder, and a thickener in addition to the artificial graphite disclosed above in an embodiment of this application or the negative electrode material disclosed in an embodiment of this application.

In an embodiment, the binder may include at least one of styrene-butadiene rubber (SBR) binder, polyacrylic acid (PAA), polyacrylic acid sodium (PAAS), polyacrylamide (PAM), polyvinyl alcohol (PVA), carboxymethyl cellulose (CMC), sodium alginate (SA), polymethyl acrylic acid (PMAA), or carboxymethyl chitosan (CMCS). Such binders can increase the bonding strength between the negative electrode material particles, improve the mechanical properties of the negative active layer, and improve the energy density and cycle performance of the negative electrode in this embodiment of this application.

In an example, the conductive agent may include at least one of Super P, graphite, superconductive carbon, acetylene black, Ketjen black, carbon dots, carbon nanotubes, graphene, or carbon nanofibers. Such conductive agents can be uniformly dispersed, and work together with the ingredients such as the graphite contained in the negative active layer to enhance the conductivity and improve electronic conductivity of the negative active layer.

In an example, the thickener may include at least one of sodium carboxymethyl cellulose (CMC-Na). Such thickener can effectively increase the uniformity of dispersion of the material contained in the negative active layer, and in turn, improve the mechanical homogeneity of the negative active layer, thereby improving the energy density and cycle performance of the negative electrode in this embodiment of this application.

**Battery**

According to a fifth aspect, an embodiment of this application provides a battery. The battery includes a negative electrode. The negative electrode is the negative electrode disclosed above in an embodiment of this application. In other words, the negative electrode contains the artificial graphite disclosed above in an embodiment of this application.

In an example, the battery in this embodiment of this application may be a secondary battery. When the battery in this embodiment of this application is a secondary battery, the battery includes a positive electrode, a separator, and a negative electrode. In other words, the negative electrode contained in the secondary battery is the negative electrode disclosed above in an embodiment of this application. Put differently, the negative electrode contains the artificial graphite disclosed above in an embodiment of this application.

In this way, the battery such as a secondary battery in this embodiment of this application possesses a high energy density, high rate performance, and good cycle stability.

In an embodiment, the secondary battery in this embodiment of this application may include any one of a battery cell, a battery module, or a battery pack.

The battery cell includes a housing and a bare cell packaged in the housing. The shape of the battery cell is not particularly limited, and may be cylindrical, prismatic, or in any other shapes. FIG. 2 shows a prismatic battery cell 10.

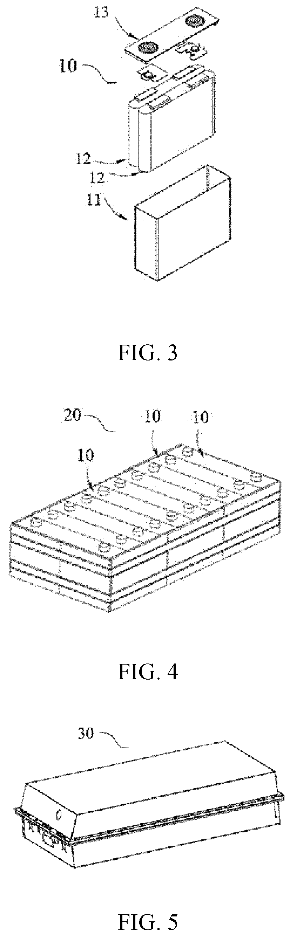

In some embodiments, as shown in FIG. 3, an outer package of the battery cell 10 may include a housing 11 and a cover plate 13. The housing 11 may include a bottom plate and a side plate connected to the bottom plate. The bottom plate and the side plate close in to form an accommodation cavity. The housing 11 is equipped with an opening that communicates with the accommodation cavity. The cover plate 13 is configured to fit and cover the opening to close the accommodation cavity. The positive electrode, separator, and negative electrode contained in the secondary battery in this embodiment of this application can formed an electrode assembly 12 through a winding process and/or a stacking process. The electrode assembly 12 is packaged in the accommodation cavity. The electrolyte solution infiltrates in the electrode assembly 12. The number of electrode assemblies 12 contained in the battery cell 10 may be one or more, and is adjustable as actually required.

The preparation method of the battery cell 10 is well known. In some embodiments, a positive electrode, a separator, a negative electrode, and an electrolyte solution may be assembled to form a battery cell 10. As an example, the positive electrode, the separator, and the negative electrode may be wound or stacked to form an electrode assembly 12, and the electrode assembly 12 may be put into an outer package, dried, filled with an electrolyte solution, and then subjected to steps such as vacuum sealing, standing, chemical formation, and shaping to obtain a battery cell 10.

A battery module is formed by assembling the battery cells 10, that is, may contain a plurality of battery cells 10. The specific number of battery cells in a battery module may be adjusted depending on practical applications and capacity of the battery module.

In some embodiments, FIG. 4 is a schematic diagram of a battery module 20 as an example. As shown in FIG. 4, in the battery module 20, a plurality of battery cells 10 may be arranged sequentially along a length direction of the battery module 20. Alternatively, the secondary batteries may be arranged in any other manner. Further, the plurality of battery cells 10 may be fixed by a fastener.

Optionally, the battery module 20 may further include a shell that provides an accommodation space. The plurality of battery cells 10 are accommodated in the accommodation space.

A battery pack is formed by assembling the battery cells 10, that is, may contain a plurality of battery cells 10. The plurality of battery cells 10 may be assembled into the battery module 20. The number of the battery cells 10 or battery modules 20 contained in a battery pack may be adjusted depending on practical applications and capacity of the battery pack.

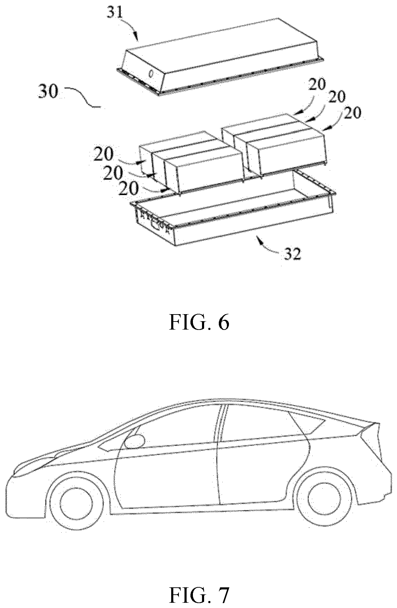

In an embodiment, FIG. 5 and FIG. 6 are schematic diagrams of a battery pack 30 as an example. The battery pack 30 may contain a battery box and a plurality of battery modules 20 disposed in the battery box. The battery box includes an upper box 31 and a lower box 32. The upper box 31 is configured to fit and cover the lower box 32 to form a closed space for accommodating the battery modules 20. The plurality of battery modules 20 may be arranged in the battery box in any manner.

**Electrical device**

According to a sixth aspect, an embodiment of this application further provides an electrical device. The electrical device includes the secondary battery disclosed above in an embodiment of this application. The secondary battery may be used as a power supply of the electrical device or used as an energy storage unit of the electrical device. Therefore, the electrical device in this embodiment of this application possesses a long standby time or power endurance time.

The electrical device may be, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system. The secondary battery, battery module, or battery pack may be selected for use in the electrical device depending on practical requirements of the electrical device.

FIG. 7 is a schematic diagram of an electrical device as an example. The electrical device may be a battery electric vehicle, a hybrid electric vehicle, a plug-in hybrid electric vehicle, or the like. A battery pack or a battery module may be employed to meet the requirements of the electrical device for a high power and a high energy density.

In another example, the electrical device may be a mobile phone, a tablet computer, a notebook computer, or the like. The electrical device is generally required to be thin and light, and may employ a secondary battery as a power supply.

**Embodiments**

The following describes some embodiments of this application. The embodiments described below are illustrative and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

1. Embodiments of artificial graphite and preparation method thereof

Embodiment A1

This embodiment provides an artificial graphite and a preparation method thereof. A preparation method of the artificial graphite in this embodiment includes the following steps:

S1: Preparing an artificial graphite raw material:

S11: Coarsely crushing a petroleum coke raw material with a jaw crusher, finely crushing the raw material with a mechanical grinder, and then grading the particles to obtain a granular solid-state carbon source.
S12: Shaping the granular solid-state carbon source in step S11 to obtain shaped particles with a $Dv_{50}$ of 12 $\mu$m.
S13: Adding 10 wt% binder pitch ($Dv_{50}$: 5 $\mu$m to 8 $\mu$m) into the shaped particles obtained in step S12, mixing the binder with the shaped particles at a stirring speed of 1200 r/min. Raising the temperature to 560 °C, and granulating the mixture until the particle diameter is 20 $\mu$m to obtain carbon source particles.
S14: Graphitizing the carbon source particles obtained in step S13 at 3000 °C, and then sieving the particles to obtain artificial graphite.

S2. Heat treatment:

Raising the temperature of a rotary kiln to 400 °C, setting the rotation speed of the furnace tube to 5 r/min, setting the gas flow rate of a mixed gas of $O_2$ and $N_2$ (the content of $O_2$ is 40%) to 8 $m^3$/h, and feeding the artificial graphite raw material prepared in step S1 through a rotary feeder from an inlet of the rotary kiln to a cavity of the rotary kiln at a constant speed. Heat-treating the raw material in the cavity for 60 minutes. Performing surface treatment in the cavity, and then cooling the raw material to obtain artificial graphite.

Embodiment A2

This embodiment provides an artificial graphite and a preparation method thereof. A preparation method of the artificial graphite in this embodiment includes the following steps:

S1. Preparing an artificial graphite raw material: Reference may be made to step S1 in Embodiment A1.
S2. Heat treatment:

Raising the temperature of a rotary kiln to 500 °C, setting the rotation speed of the furnace tube to 7 r/min, setting the gas flow rate of a mixed gas of $O_2$ and $N_2$ (the content of $O_2$ is 30%) to 5 $m^3/h$, and feeding the artificial graphite raw material prepared in step S1 through a rotary feeder from an inlet of the rotary kiln to a cavity of the rotary kiln at a constant speed. Heat-treating the raw material in the cavity for 45 minutes. Performing surface treatment in the cavity, and then cooling the raw material to obtain artificial graphite.

Embodiment A3

This embodiment provides an artificial graphite and a preparation method thereof. A preparation method of the artificial graphite in this embodiment includes the following steps:

S1. Preparing an artificial graphite raw material: Reference may be made to step S1 in Embodiment A1.
S2. Heat treatment:

Raising the temperature of a rotary kiln to 600 °C, setting the rotation speed of the furnace tube to 2 r/min, setting the gas flow rate of a mixed gas of $O_2$ and $N_2$ (the content of $O_2$ is 20%) to 8 $m^3/h$, and feeding the artificial graphite raw material prepared in step S1 through a rotary feeder from an inlet of the rotary kiln to a cavity of the rotary kiln at a constant speed. Heat-treating the raw material in the cavity for 25 minutes. Performing surface treatment in the cavity, and then cooling the raw material to obtain artificial graphite.

Embodiment A4

This embodiment provides an artificial graphite and a preparation method thereof. A preparation method of the artificial graphite in this embodiment includes the following steps:

S1. Preparing an artificial graphite raw material: Reference may be made to step S1 in Embodiment A1.
S2. Heat treatment:

Raising the temperature of a rotary kiln to 650 °C, setting the rotation speed of the furnace tube to 3 r/min, setting the gas flow rate of a mixed gas of water vapor and $N_2$ (the volume percent of water vapor is 40%) to 3 $m^3/h$, and feeding the artificial graphite raw material prepared in step S1 through a rotary feeder from an inlet of the rotary kiln to a cavity of the rotary kiln at a constant speed. Heat-treating the raw material in the cavity for 20 minutes. Performing surface treatment in the cavity, and then cooling the raw material to obtain artificial graphite.

Embodiment A5

This embodiment provides an artificial graphite and a preparation method thereof. The compaction density $P_{5k}$, $Dv_{50}$, graphitization degree G, specific surface area S, and gravimetric capacity of the artificial graphite in this embodiment are shown in Table 1 below.
A preparation method of the artificial graphite in this embodiment includes the following steps:

S1. Preparing an artificial graphite raw material: Reference may be made to step S1 in Embodiment A1.
S2. Heat treatment:

Raising the temperature of a rotary kiln to 700 °C, setting the rotation speed of the furnace tube to 3 r/min, setting the gas flow rate of a mixed gas of $O_2$ and $N_2$ (the content of $O_2$ is 5%) to 3 $m^3/h$, and feeding the artificial graphite raw material prepared in step S1 through a rotary feeder from an inlet of the rotary kiln to a cavity of the rotary kiln at a constant speed. Heat-treating the raw material in the cavity for 45 minutes. Performing surface treatment in the cavity, and then cooling the raw material to obtain artificial graphite.

Embodiment A6

This embodiment provides an artificial graphite and a preparation method thereof. A preparation method of the artificial graphite in this embodiment includes the following steps:

S1. Preparing an artificial graphite raw material: Reference may be made to step S1 in Embodiment A1.
S2. Heat treatment:

Raising the temperature of a rotary kiln to 850 °C, setting the rotation speed of the furnace tube to 8 r/min, setting the gas flow rate of a mixed gas of water vapor and $N_2$ (the content of water vapor is 5%) to 3 $m^3$/h, and feeding the artificial graphite raw material prepared in step S1 through a rotary feeder from an inlet of the rotary kiln to a cavity of the rotary kiln at a constant speed. Heat-treating the raw material in the cavity for 30 minutes. Performing surface treatment in the cavity, and then cooling the raw material to obtain artificial graphite.

Embodiment A7

This embodiment provides an artificial graphite and a preparation method thereof. A preparation method of the artificial graphite in this embodiment includes the following steps:

S1. Preparing an artificial graphite raw material: Reference may be made to step S1 in Embodiment A1.
S2. Heat treatment:

Raising the temperature of a rotary kiln to 850 °C, setting the rotation speed of the furnace tube to 1 r/min, setting the gas flow rate of a mixed gas of water vapor and $N_2$ (the content of water vapor is 10%) to 5 $m^3$/h, and feeding the artificial graphite raw material prepared in step S1 through a rotary feeder from an inlet of the rotary kiln to a cavity of the rotary kiln at a constant speed. Heat-treating the raw material in the cavity for 15 minutes. Performing surface treatment in the cavity, and then cooling the raw material to obtain artificial graphite.

Embodiment A8

This embodiment provides an artificial graphite and a preparation method thereof. A preparation method of the artificial graphite in this embodiment includes the following steps:

S1. Preparing an artificial graphite raw material: Reference may be made to step S1 in Embodiment A1.
S2. Heat treatment:

Raising the temperature of a rotary kiln to 900 °C, setting the rotation speed of the furnace tube to 3 r/min, setting the gas flow rate of a mixed gas of water vapor and $N_2$ (the content of water vapor is 5%) to 5 $m^3$/h, and feeding the artificial graphite raw material prepared in step S1 through a rotary feeder from an inlet of the rotary kiln to a cavity of the rotary kiln at a constant speed. Heat-treating the raw material in the cavity for 10 minutes. Performing surface treatment in the cavity, and then cooling the raw material to obtain artificial graphite.

Comparative Embodiment A1

This comparative embodiment provides an artificial graphite and a preparation method thereof. The artificial graphite in this comparative embodiment is the artificial graphite prepared in step S1 in Embodiment A1.
A preparation method of the artificial graphite in this comparative embodiment includes the following step: preparing the artificial graphite according to step S1 of the artificial graphite preparation method in Embodiment A1.

Comparative Embodiment A2

This comparative embodiment provides an artificial graphite and a preparation method thereof. A preparation method of the artificial graphite in this comparative embodiment includes the following steps:

S1. Preparing an artificial graphite raw material: Reference may be made to step S1 in Embodiment A1; and
S2. Heat treatment:

Raising the temperature of a rotary kiln to 300 °C, setting the rotation speed of the furnace tube to 5 r/min, setting the gas flow rate of pure oxygen to 5 m$^3$/h, and feeding the artificial graphite raw material prepared in step S1 through a rotary feeder from an inlet of the rotary kiln to a cavity of the rotary kiln at a constant speed. Heat-treating the raw material in the cavity for 30 minutes. Performing surface treatment in the cavity, and then cooling the raw material to obtain artificial graphite.

Comparative Embodiment A3

This comparative embodiment provides an artificial graphite and a preparation method thereof. A preparation method of the artificial graphite in this comparative embodiment includes the following steps:

S1. Preparing an artificial graphite raw material: Reference may be made to step S1 in Embodiment A1; and
S2. Heat treatment:

Raising the temperature of a rotary kiln to 600 °C, setting the rotation speed of the furnace tube to 2 r/min, setting the gas flow rate of pure nitrogen to 12 m$^3$/h, and feeding the artificial graphite raw material prepared in step S1 through a rotary feeder from an inlet of the rotary kiln to a cavity of the rotary kiln at a constant speed. Heat-treating the raw material in the cavity for 120 minutes. Performing surface treatment in the cavity, and then cooling the raw material to obtain artificial graphite.

Comparative Embodiment A4

This comparative embodiment provides an artificial graphite and a preparation method thereof. A preparation method of the artificial graphite in this comparative embodiment includes the following steps:

S1. Preparing an artificial graphite raw material: Reference may be made to step S1 in Embodiment A1; and
S2. Heat treatment:

Raising the temperature of a rotary kiln to 550 °C, setting the rotation speed of the furnace tube to 2 r/min, setting the gas flow rate of pure nitrogen to 12 m$^3$/h, and feeding the artificial graphite raw material prepared in step S1 through a rotary feeder from an inlet of the rotary kiln to a cavity of the rotary kiln at a constant speed. Heat-treating the raw material in the cavity for 180 minutes. Performing surface treatment in the cavity, and then cooling the raw material to obtain artificial graphite.

Comparative Embodiment A5

This comparative embodiment provides an artificial graphite and a preparation method thereof. The compaction density $P_{5k}$, $Dv_{50}$, graphitization degree G, specific surface area S, and gravimetric capacity of the artificial graphite in this comparative embodiment are shown in Table 1 below.
A preparation method of the artificial graphite in this comparative embodiment includes the following steps:

S1. Preparing an artificial graphite raw material: Reference may be made to step S1 in Embodiment A1; and
S2. Heat treatment:

Raising the temperature of a rotary kiln to 800 °C, setting the rotation speed of the furnace tube to 2 r/min, setting the gas flow rate of pure oxygen to 12 m$^3$/h, and feeding the artificial graphite raw material prepared in step S1 through a rotary feeder from an inlet of the rotary kiln to a cavity of the rotary kiln at a constant speed. Heat-treating the raw material in the cavity. Performing surface treatment in the cavity, and then cooling the raw material to obtain artificial graphite.

Comparative Embodiment A6

This comparative embodiment provides an artificial graphite and a preparation method thereof. The compaction density $P_{5k}$, $Dv_{50}$, graphitization degree G, specific surface area S, and gravimetric capacity of the artificial graphite in this comparative embodiment are shown in Table 1 below.

A preparation method of the artificial graphite in this comparative embodiment includes the following steps:

S1. Preparing an artificial graphite raw material: Reference may be made to step S1 in Embodiment A1; and
S2. Heat treatment:

Raising the temperature of a rotary kiln to 950 °C, setting the rotation speed of the furnace tube to 10 r/min, setting the gas flow rate of pure nitrogen to 1 $m^3$/h, and feeding the artificial graphite raw material prepared in step S1 through a rotary feeder from an inlet of the rotary kiln to a cavity of the rotary kiln at a constant speed. Heat-treating the raw material in the cavity. Performing surface treatment in the cavity, and then cooling the raw material to obtain artificial graphite.

2. Embodiments of the secondary battery cell

Embodiments B1 to B8 and Comparative Embodiments B1 to B6.
Embodiments B1 to B18 and Comparative Embodiments B1 to B6 each provide a secondary battery cell. Each secondary battery cell includes a bare cell formed by a positive electrode, a separator, and a negative electrode, and further includes an electrolyte solution.
The positive electrode is prepared according to the following method:
Mixing well $LiNi_{0.5}Co_{0.2}Mn_{0.3}O_2$ (NCM523) as a positive active material, Super P as a conductive agent, and PVDF as a binder at a mass ratio of 96.2: 2.7: 1.1 in an appropriate amount of NMP solvent to form a uniform positive electrode slurry. Coating a surface of positive current collector aluminum foil with the positive electrode slurry and drying and cold-pressing the foil to obtain a positive electrode plate. Measuring the compaction density of the positive electrode, recorded as 3.45 g/$cm^3$.
The negative electrode is prepared according to the following method:
Mixing well the artificial graphite, conductive agent (Super P), binder (SBR), thickener (CMC-Na) at a mass ratio of 96.2: 0.8: 1.8: 1.2 in an appropriate amount of deionized water to form a uniform negative electrode slurry; applying the negative electrode slurry onto a surface of negative current collector copper foil, and drying and cold-pressing the foil to obtain a negative electrode plate, where the artificial graphite is the artificial graphite provided above in Embodiments A1 to A8 and the artificial graphite provided in Comparative Embodiments A1 to A6; using the artificial graphite provided in Embodiment A1 to prepare the negative electrode contained in the secondary battery cell in Embodiment B1, using the artificial graphite provided in Embodiment A2 to prepare the negative electrode contained in the secondary battery cell in Embodiment B2, and so on, and using the artificial graphite provided in Comparative Embodiment A1 to prepare the negative electrode contained in the secondary battery cell in Comparative Embodiment B1. The compaction density and areal density of the negative electrode are shown in Table 1.
Electrolyte solution: mixing ethylene carbonate (EC), ethyl methyl carbonate (EMC), and diethyl carbonate (DEC) at a volume ratio of 1: 1: 1, and dissolving $LiPF_6$ in the forgoing solution homogeneously to obtain an electrolytic solution, in which the concentration of $LiPF_6$ is 1 mol/L.
Separator: using a polyethylene (PE) film as a separator.
The secondary battery is assembled in the following way: stacking the positive electrode, the separator, and the negative electrode sequentially to form a bare cell, putting the bare cell into an outer package, filling the bare cell with an electrolyte solution, and sealing the package to obtain a secondary battery cell.

**Performance test of the artificial graphite and the secondary battery cell**

The artificial graphite and the secondary battery cell provided in each embodiment and each comparative embodiment above are tested with respect to the relevant items listed in the following Table 1. The test results are shown in Table 1 below:
Other performance indicators in Table 1 are tested according to national standards or industrial standards.

Table 1

| | | Artificial graphite | | | | | | Battery cell | | |
|---|---|---|---|---|---|---|---|---|---|---|
| | | Compaction density $P_{5k}$ (g/cm$^3$) | $Dv_{50}$ (μm) | Graphitization degree G (%) | ks | BET specific surface area (m$^2$/g) | Gravimetric capacity (g/cm$^3$) | Compaction density of negative electrode (g/cm$^3$) | Areal density of negative electrode (mg/cm$^2$) | Actual energy density of bare cell (Wh/kg) |
| Embodiment | A1 | 1.80 | 16.0 | 93 | 121 | 1.6 | 345 | \ | \ | \ |
| | A2 | 1.80 | 18.0 | 94.5 | 106 | 1.5 | 345 | \ | \ | \ |
| | A3 | 1.88 | 20 | 93 | 101 | 2.1 | 353 | \ | \ | \ |
| | A4 | 1.88 | 16.0 | 92 | 128 | 1.9 | 353 | \ | \ | \ |
| | A5 | 1.97 | 17.5 | 95 | 138 | 2.0 | 358 | \ | \ | \ |
| | A6 | 1.97 | 18.0 | 96 | 114 | 1.7 | 358 | \ | \ | \ |
| | A7 | 2.10 | 18.0 | 96 | 122 | 1.6 | 360 | \ | \ | \ |
| | A8 | 2.10 | 22.0 | 94.5 | 101 | 1.5 | 360 | \ | \ | \ |
| Comparative Embodiment | A1 | 1.55 | 18 | 96 | 90 | 1.0 | 345 | \ | \ | \ |
| | A2 | 1.63 | 20 | 96 | 83 | 1.3 | 350 | \ | \ | \ |
| | A3 | 1.80 | 22 | 94 | 87 | 1.4 | 350 | \ | \ | \ |
| | A4 | 1.80 | 10 | 92 | 196 | 1.1 | 345 | \ | \ | \ |
| | A5 | 1.85 | 13 | 92 | 155 | 5.5 | 358 | \ | \ | \ |
| | A6 | 1.88 | 12 | 92 | 170 | 1.2 | 360 | \ | \ | \ |
| Embodiment | B1 | \ | \ | \ | \ | \ | | 1.63 | 11.6 | 230 |
| | B2 | \ | \ | \ | \ | \ | | 1.7 | 11.6 | 238 |
| | B3 | \ | \ | \ | \ | \ | | 1.63 | 11.6 | 235 |
| | B4 | \ | \ | \ | \ | \ | | 1.68 | 11.6 | 238 |
| | B5 | \ | \ | \ | \ | \ | | 1.65 | 11.6 | 237 |
| | B6 | \ | \ | \ | \ | \ | | 1.72 | 11.6 | 240 |
| | B7 | \ | \ | \ | \ | \ | | 1.75 | 11.6 | 243 |
| | B8 | \ | \ | \ | \ | \ | | 1.8 | 11.6 | 248 |

(continued)

| | | Artificial graphite | | | | | | Battery cell | | |
| | | Compaction density $P_{5k}$ (g/cm³) | $Dv_{50}$ (μm) | Graphitization degree G (%) | ks | BET specific surface area (m²/g) | Gravimetric capacity (g/cm³) | Compaction density of negative electrode (g/cm³) | Areal density of negative electrode (mg/cm²) | Actual energy density of bare cell (Wh/kg) |
|---|---|---|---|---|---|---|---|---|---|---|
| Comparative Embodiment | B1 | — | — | — | — | — | | 1.43 | 11.6 | 220 |
| | B2 | — | — | — | — | — | | 1.45 | 11.6 | 223 |
| | B3 | — | — | — | — | — | | 1.52 | 11.6 | 228 |
| | B4 | — | — | — | — | — | | 1.55 | 11.6 | 228 |
| | B5 | — | — | — | — | — | | 1.53 | 11.6 | 230 |
| | B6 | — | — | — | — | — | — | 1.58 | 11.6 | 235 |

As can be seen from Table 1, after the graphite raw material is heat-treated in a way specified in this application according to the artificial graphite preparation method disclosed in an embodiment of this application, the graphite raw material can be effectively modified with respect to properties including at least the surface properties. In this way, the physical and electrochemical performance of the artificial graphite can be effectively changed. For example, both the artificial graphite material and the resulting active layer are caused to achieve a high compaction density. On this basis, if the compaction density $P_{5k}$, the graphitization degree, and the particle diameter $Dv_{50}$ of the artificial graphite material satisfy the ks relational expression described above, and ks is controlled to be 100 to 150 or further controlled to be 110 to 130, then the compaction density of the active layer formed by the artificial graphite can be further increased. For example, the compaction densities of the electrode plates and the resulting batteries in Embodiments A1 to A8 are significantly higher than the compaction densities of the electrode plates and the resulting batteries in Comparative Embodiments A1 to A6.

As can be seen from above, after the graphite raw material is heat-treated in a specified way according to the artificial graphite preparation method disclosed in an embodiment of this application, the compaction densities of the modified artificial graphite and the corresponding active layer can be effectively improved. In addition, the $\eta/P_{5k}$ of the modified artificial graphite can be controlled in an appropriate range. For example, the compaction density $P_{5k}$, the graphitization degree, and the particle diameter $Dv_{50}$ of the artificial graphite material are caused to satisfy the ks relational expression, and the ks value is controlled to be 100 to 150, and further, controlled to be 110 to 130. When the ks value falls within the specified range, the compaction density of the artificial graphite material in this embodiment of this application is significantly improved, and the bonding force between the material particles is strong, and the conductivity is high. In addition, the negative active layer contained in the negative electrode prepared from the artificial graphite material possesses a high compaction density and a high energy density. In addition, the negative active layer is structurally stable and exhibits high cycle performance, thereby endowing the secondary battery cell containing the negative electrode with a high energy density, high rate performance, and good cycle stability.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

**Claims**

1.   A preparation method of artificial graphite, **characterized in that** the preparation method comprises the following step:

   heat-treating a graphite raw material to obtain artificial graphite, wherein
   an ambient atmosphere of the heat treatment is a mixed gas comprising a gas that is at least one of oxygen or water vapor and comprising a chemically inert gas, and, during the heat treatment, the graphite raw material is in a motion state.

2.   The preparation method according to claim 1, **characterized in that** the heat treatment is performed at a temperature of 400 °C to 900 °C; and
   the heat treatment is performed at a temperature of 400 °C to 900 °C and for duration of 10 to 60 minutes.

3.   The preparation method according to claim 1 or 2, **characterized in that** the motion state of the graphite raw material is at least one of a continuous fluidizing state or a tumbling state.

4.   The preparation method according to claim 4, **characterized in that** the tumbling state is implemented by rotation of a furnace tube or rotation of a mechanical rod, and a rotation speed of the furnace tube or the mechanical rod is 1 to 8 r/min.

5.   The preparation method according to any one of claims 1 to 4, **characterized in that**, in the mixed gas, the gas that is at least one of oxygen or water vapor accounts for 5% to 40% of a total volume of the mixed gas; and/or

during the heat treatment, the mixed gas is fed in at a flow rate of 0 to 10 m$^3$/h.

6. The preparation method according to any one of claims 1 to 5, **characterized in that**

   a particle diameter Dv$_{50}$ of the graphite raw material is 16.0 to 24.0 $\mu$m; and/or
   the graphite is an artificial graphite material.

7. The preparation method according to claim 6, **characterized in that**, the preparation method of the artificial graphite material comprises the following steps:

   crushing a solid-state carbon source to obtain a granular solid-state carbon source;
   shaping the granular solid-state carbon source to obtain shaped particles; and
   graphitizing the shaped particles to obtain an artificial graphite raw material.

8. The preparation method according to claim 7, **characterized in that** a particle diameter Dv$_{50}$ of the granular solid-state carbon source is 16.0 to 24.0 $\mu$m; and/or

   the solid-state carbon source comprises at least one of petroleum coke, needle coke, pitch coke, or metallurgical coke; and/or
   the graphitization is performed at a temperature of 2800 °C to 3200 °C; and/or
   before the shaped particles are graphitized, the preparation method further comprises a step of granulating the shaped particles.

9. The preparation method according to claim 8, **characterized in that** a method of the granulation comprises the following step:
   mixing a carbon source binder with the shaped particles, and then performing granulation and molding.

10. An artificial graphite, **characterized in that** the artificial graphite is artificial graphite prepared by the preparation method according to any one of claims 1 to 9.

11. The artificial graphite according to claim 10, **characterized in that** a compaction density and a particle diameter of the artificial graphite satisfy the following relationships:

$$ks = P_{5k}/(Dv_{50} \times G), \text{ and } 100 \le ks \le 150,$$

wherein, P$_{5k}$ is a compaction density of powder of the artificial graphite at a pressure of 5000 kg, measured in units of g/cm$^3$; Dv$_{50}$ is an average particle diameter of the artificial graphite, measured in units of $\mu$m; G is a graphitization degree of the artificial graphite; and ks is measured in units of kg/cm$^4$.

12. The artificial graphite according to claim 10 or 11, **characterized in that** ks satisfies $110 \le ks \le 130$.

13. The artificial graphite according to any one of claims 10 to 12, **characterized in that** P$_{5k}$ is 1.80 to 2.10 g/cm$^{-3}$; and/or

   Dv$_{50}$ is 16.0 to 24.0 $\mu$m; and/or
   G is 91% to 96%.

14. The artificial graphite according to any one of claims 10 to 13, **characterized in that** P$_{5k}$ is 1.85 to 2.05 g/cm$^{-3}$; and/or

   Dv$_{50}$ is 16.0 to 18.0 $\mu$m; and/or
   G is 92% to 95%.

15. The artificial graphite according to any one of claims 10 to 14, **characterized in that** a volume average diameter Dv$_{10}$ of the artificial graphite is 4.0 to 15.0 $\mu$m; and/or

   a volume average diameter Dv$_{90}$ of the artificial graphite is 20.0 to 40.0 $\mu$m; and/or
   a number average diameter Dn$_{10}$ of the artificial graphite is 2.0 to 8.0 $\mu$m.

**16.** The artificial graphite according to any one of claims 10 to 15, **characterized in that** the artificial graphite further exhibits at least one of the following characteristics:

a gravimetric capacity of the artificial graphite is 340 to 365 mAh/g;
a specific surface area of the artificial graphite is 1.5 to 2.5 $m^2$/g; and
a tap density of the artificial graphite is 0.80 to 1.20 g/$cm^3$.

**17.** The artificial graphite according to any one of claims 10 to 16, **characterized in that** the artificial graphite further exhibits at least one of the following characteristics:

a gravimetric capacity of the artificial graphite is 345 to 363 mAh/g;
a specific surface area of the artificial graphite is 1.6 to 2.3 $m^2$/g; and
a tap density of the artificial graphite is 0.82 to 1.18 g/$cm^3$.

**18.** A negative electrode material, **characterized in that** the negative electrode material comprises artificial graphite, and the artificial graphite is the artificial graphite according to any one of claims 10 to 17.

**19.** A negative electrode, **characterized in that** a negative electrode material contained in the negative electrode comprises the artificial graphite according to any one of claims 10 to 17 or the negative electrode material according to claim 18.

**20.** A battery, **characterized in that** the battery comprises the negative electrode according to claim 19.

**21.** An electrical device, **characterized in that** the electrical device comprises the battery according to claim 20, and the battery is configured to provide electrical energy.

Crush a solid-state carbon source to obtain a granular solid-state carbon source — S01

Shape the granular solid-state carbon source to obtain shaped particles — S02

Graphitize the shaped particles to obtain an artificial graphite raw material — S03

FIG. 1

FIG. 2

FIG. 3

FIG. 4

FIG. 5

FIG. 6

FIG. 7

## INTERNATIONAL SEARCH REPORT

| International application No. |
|---|
| **PCT/CN2022/134148** |

| A. | CLASSIFICATION OF SUBJECT MATTER |
|---|---|

H01M4/587(2010.01)i; H01M10/0525(2010.01)i; C04B35/32(2006.01)i; C04B35/622(2006.01)i

According to International Patent Classification (IPC) or to both national classification and IPC

| B. | FIELDS SEARCHED |
|---|---|

Minimum documentation searched (classification system followed by classification symbols)

IPC: H01M; C04B

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 锂, 电池, 负极, 阳极, 石墨, 流化, 沥青, 焦, lithium, battery, cell, negative, anode, graphite, fluidization, pitch, coke

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022121136 A1 (GUANGDONG KAIJIN NEW ENERGY TECHNOLOGY CO., LTD.) 16 June 2022 (2022-06-16) description, paragraphs 4-33 | 1-21 |
| X | CN 112018386 A (NINGBO SHANSHAN NEW MATERIAL TECHNOLOGY CO., LTD.) 01 December 2020 (2020-12-01) description, paragraphs 6-76 | 1-21 |
| X | CN 113422019 A (HUNAN ZHONGKE SHINZOOM TECHNOLOGY CO., LTD.) 21 September 2021 (2021-09-21) description, paragraphs 3-111 | 1-21 |
| A | CN 112875697 A (GUANGDONG KAIJIN NEW ENERGY TECHNOLOGY CO., LTD.) 01 June 2021 (2021-06-01) entire document | 1-21 |
| A | KR 20210051878 A (POSCO et al.) 10 May 2021 (2021-05-10) entire document | 1-21 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 August 2023** | **07 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/134148**

| Patent document cited in search report | | | Publication date (day/month/year) | Patent family member(s) | | | Publication date (day/month/year) |
|---|---|---|---|---|---|---|---|
| WO | 2022121136 | A1 | 16 June 2022 | CN | 112573923 | A | 30 March 2021 |
| CN | 112018386 | A | 01 December 2020 | CN | 112018386 | B | 15 March 2022 |
| CN | 113422019 | A | 21 September 2021 | CN | 113422019 | B | 21 March 2023 |
| CN | 112875697 | A | 01 June 2021 | WO | 2022166058 | A1 | 11 August 2022 |
| KR | 20210051878 | A | 10 May 2021 | KR | 20210156830 | A | 27 December 2021 |

Form PCT/ISA/210 (patent family annex) (July 2022)